# EUROPEAN PATENT APPLICATION

(11) **EP 4 247 042 A1**
(43) Date of publication of application: **20.09.2023**
(21) Application number: 22852162.1
(22) Date of filing: 02.08.2022
(51) Int. Cl.: H04W 24/02, H04W 8/08, H04W 28/02

(54) **METHOD AND APPARATUS FOR EXPOSING NETWORK INFORMATION, ELECTRONIC DEVICE, AND STORAGE MEDIUM**

(30) Priority: 06.08.2021 CN 202110903731
(71) Applicant: TENCENT TECHNOLOGY (SHENZHEN) COMPANY LIMITED, Shenzhen, Guangdong 518057 (CN)
(72) Inventor: ZHANG, Zhuoyun, Shenzhen, Guangdong 518057 (CN)
(74) Representative: EP&C
(86) International application number: PCT/CN2022/109651
(87) International publication number: WO 2023/011450

(57) **Abstract**

Provided by embodiments of the present application are a method and apparatus for exposing network information, an electronic device, and a storage medium. The method is performed by an electronic device and comprises: sending a wireless network information exposure request to a network exposure function network element, the wireless network information exposure request carrying an application function identifier of an application function network element and category information of target wireless network information, so that the network exposure function network element transmits to a base station the category information and an application function address corresponding to the application function identifier, and the base station acquires the target wireless network information according to the category information, and sends the target wireless network information and the application function address to an anchor user plane function network element; and acquiring the target wireless network information returned by the anchor user plane function network element according to the application function address.

## Description

### RELATED APPLICATION

This disclosure claims priority to Chinese Patent Application No. 202110903731.7, entitled "NETWORK INFORMATION EXPOSURE METHOD AND RELATED DEVICE" filed with the China National Intellectual Property Administration on August 6, 2021.

### FIELD OF THE TECHNOLOGY

This disclosure relates to the field of communication technologies, and in particular, to a network information exposure method and apparatus, an electronic device, and a storage medium.

### BACKGROUND OF THE DISCLOSURE

In the related art, a network capability that may be exposed does not include wireless network information, and capability exposure of the wireless network information cannot be implemented.

Therefore, how to implement capability exposure of wireless network information is a problem currently urgent to be solved.

It is to be noted that the information disclosed in BACKGROUND OF THE DISCLOSURE is only used to strengthen an understanding of a background of this disclosure.

### SUMMARY

Embodiments of this disclosure provide a network information exposure method and apparatus, an electronic device, and a computer-readable storage medium, which can implement exposure of wireless network information.

Other features and advantages of this disclosure become apparent through the following detailed descriptions or partially learned through the practice of this disclosure.

An embodiment of this disclosure provides a network information exposure method, performed by an electronic device and including:
sending a wireless network information exposure request to a network exposure function (NEF) network element, the wireless network information exposure request carrying an application function (AF) identity (ID) of an AF network element and type information of target wireless network information, such that the NEF network element transmits the type information and an AF address corresponding to the AF ID to a base station, and the base station acquires the target wireless network information according to the type information, and sends the target wireless network information and the AF address to an anchor user plane function (UPF) network element; and
acquiring the target wireless network information returned by the anchor UPF network element according to the AF address.

An embodiment of this disclosure provides a network information exposure method, performed by an electronic device and including:
receiving a wireless network information exposure request sent by an AF network element, the wireless network information exposure request carrying an AF ID of the AF network element and type information of target wireless network information; and
sending the type information and an AF address corresponding to the AF ID to an access and mobility management function (AMF) network element, such that the AMF network element sends the type information and the AF address to a base station, the base station acquires the target wireless network information according to the type information, and sends the target wireless network information and the AF address to an anchor UPF network element, and the anchor UPF network element returns the target wireless network information to the AF network element according to the AF address.

An embodiment of this disclosure provides a network information exposure method, performed by an electronic device and including:
receiving type information of target wireless network information and an AF address from a NEF network element, the NEF network element receiving a wireless network information exposure request sent by an AF network element corresponding to the AF address, and the wireless network information exposure request carrying an AF ID of the AF network element and the type information; and
sending the type information and the AF address to a base station, such that the base station acquires the target wireless network information according to the type information, and sends the target wireless network information and the AF address to an anchor UPF network element, and the anchor UPF network element returns the target wireless network information to the AF network element according to the AF address.

An embodiment of this disclosure provides a network information exposure method, including: receiving type information of target wireless network information and an AF address from an AMF network element, the AMF network element receiving the type information and the AF address from a NEF network element, the NEF network element receiving a wireless network information exposure request sent by an AF network element corresponding to the AF address, and the wireless network information exposure request carrying an AF ID of the AF network element and the type information;
acquiring the target wireless network information according to the type information; and
sending the target wireless network information and the AF address to an anchor UPF network element, such that the anchor UPF network element sends the target wireless network information to the AF network element according to the AF address.

An embodiment of this disclosure provides a network information exposure method, performed by an electronic device and including:
receiving target wireless network information and an AF address that are sent by a base station, the base station receiving type information of the target wireless network information and the AF address, which are sent by an AMF network element, and determining the target wireless network information according to the type information, the AMF network element receiving the type information and the AF address from a NEF network element, the NEF network element receiving a wireless network information exposure request from an AF network element corresponding to the AF address, and the wireless network information exposure request carrying an AF ID of the AF network element and the type information; and
sending the target wireless network information and the AF address to an anchor UPF network element, such that the anchor UPF network element sends the target wireless network information to the AF network element according to the AF address.

An embodiment of this disclosure provides a network information exposure method, performed by an electronic device and including:
receiving target wireless network information and an AF address from an intermediate UPF network element or a base station, the intermediate UPF network element receiving the target wireless network information and the AF address that are sent by the base station, the base station receiving type information of the target wireless network information and the AF address, which are sent by an AMF network element, and determining the target wireless network information according to the type information, the AMF network element receiving the type information and the AF address from a NEF network element, the NEF network element receiving a wireless network information exposure request from an AF network element corresponding to the AF address, and the wireless network information exposure request carrying an AF ID of the AF network element and the type information; and
sending the target wireless network information to the AF network element corresponding to the AF address.

An embodiment of this disclosure provides a network information exposure apparatus, including:
a wireless network information exposure request sending unit, configured to send a wireless network information exposure request to a NEF network element, the wireless network information exposure request carrying an AF ID of an AF network element and type information of target wireless network information, such that the NEF network element transmits the type information and an AF address corresponding to the AF ID to a base station, and the base station acquires the target wireless network information according to the type information, and sends the target wireless network information and the AF address to an anchor UPF network element; and
a target wireless network information acquisition unit, configured to acquire the target wireless network information returned by the anchor UPF network element according to the AF address.

An embodiment of this disclosure provides a network information exposure apparatus, including:
a wireless network information exposure request receiving unit, configured to receive a wireless network information exposure request sent by an AF network element, the wireless network information exposure request carrying an AF ID of the AF network element and type information of target wireless network information; and
a type information and AF address sensing unit, configured to send the type information and an AF address corresponding to the AF ID to an AMF network element, such that the AMF network element sends the type information and the AF address to a base station, the base station acquires the target wireless network information according to the type information, and sends the target wireless network information and the AF address to an anchor UPF network element, and the anchor UPF network element returns the target wireless network information to the AF network element according to the AF address.

An embodiment of this disclosure provides a network information exposure apparatus, including:
a type information and AF address receiving unit, configured to receive type information of target wireless network information and an AF address from a NEF network element, the NEF network element receiving a wireless network information exposure request sent by an AF network element corresponding to the AF address, and the wireless network information exposure request carrying an AF ID of the AF network element and the type information; and
a type information and AF address transmission unit, configured to send the type information and the AF address to a base station, such that the base station acquires the target wireless network information according to the type information, and sends the target wireless network information and the AF address to an anchor UPF network element, and the anchor UPF network element returns the target wireless network information to the AF network element according to the AF address.

An embodiment of this disclosure provides a network information exposure apparatus, including:
a type information and AF address acquisition unit, configured to receive type information of target wireless network information and an AF address from an AMF network element, the AMF network element receiving the type information and the AF address from a NEF network element, the NEF network element receiving a wireless network information exposure request sent by an AF network element corresponding to the AF address, and the wireless network information exposure request carrying an AF ID of the AF network element and the type information;
a target wireless network information extraction unit, configured to acquire the target wireless network information according to the type information; and
a target wireless network information sending unit, configured to send the target wireless network information and the AF address to an anchor UPF network element, such that the anchor UPF network element sends the target wireless network information to the AF network element according to the AF address.

An embodiment of this disclosure provides a network information exposure apparatus, including:
a target wireless network information determining unit, configured to receive target wireless network information and an AF address that are sent by a base station, the base station receiving type information of the target wireless network information and the AF address, which are sent by an AMF network element, and determining the target wireless network information according to the type information, the AMF network element receiving the type information and the AF address from a NEF network element, the NEF network element receiving a wireless network information exposure request from an AF network element corresponding to the AF address, and the wireless network information exposure request carrying an AF ID of the AF network element and the type information; and
a target wireless network information forwarding unit, configured to send the target wireless network information and the AF address to an anchor UPF network element, such that the anchor UPF network element sends the target wireless network information to the AF network element according to the AF address.

An embodiment of this disclosure provides a network information exposure apparatus, including:
a target wireless network information transfer unit, configured to receive target wireless network information and an AF address from an intermediate UPF network element or a base station, the intermediate UPF network element receiving the target wireless network information and the AF address that are sent by the base station, the base station receiving type information of the target wireless network information and the AF address, which are sent by an AMF network element, and determining the target wireless network information according to the type information, the AMF network element receiving the type information and the AF address from a NEF network element, the NEF network element receiving a wireless network information exposure request from an AF network element corresponding to the AF address, and the wireless network information exposure request carrying an AF ID of the AF network element and the type information; and
a target wireless network information transmission unit, configured to send the target wireless network information to the AF network element corresponding to the AF address.

An embodiment of this disclosure provides a computer-readable storage medium, storing a computer program. The program is executed by a processor to implement the network information exposure methods described in the foregoing embodiments.

An embodiment of this disclosure provides an electronic device, including: one or more processors; and a storage apparatus, configured to store one or more programs. The one or more programs, when executed by the one or more processors, enable the electronic device to implement the network information exposure methods described in the foregoing embodiments.

According to an aspect of this disclosure, a computer program product or computer program is provided. The computer program product or computer program includes computer instructions. The computer instructions are stored in a computer-readable storage medium. A processor of a computer device reads the computer instructions from the computer-readable storage medium. The processor executes the computer instructions, such that the computer device performs the method provided in each of the foregoing optional implementations.

It is to be understood that the above general descriptions and the following detailed descriptions are merely exemplary and explanatory and not intended to limit this disclosure.

### BRIEF DESCRIPTION OF THE DRAWINGS

FIG. 1 is a schematic diagram of a fifth-generation (5G) network capability exposure architecture according to the related art.
FIG. 2 is a schematic flowchart of a network information exposure method according to an embodiment of this disclosure.
FIG. 3 is a schematic diagram of interactions in a network information exposure method according to an embodiment of this disclosure.
FIG. 4 is a schematic flowchart of a network information exposure method according to another embodiment of this disclosure.
FIG. 5 is a schematic flowchart of a network information exposure method according to still another embodiment of this disclosure.
FIG. 6 is a schematic flowchart of a network information exposure method according to another embodiment of this disclosure.
FIG. 7 is a schematic flowchart of a network information exposure method according to still another embodiment of this disclosure.
FIG. 8 is a schematic flowchart of a network information exposure method according to another embodiment of this disclosure.
FIG. 9 is a schematic block diagram of a network information exposure apparatus according to an embodiment of this disclosure.
FIG. 10 is a schematic block diagram of a network information exposure apparatus according to another embodiment of this disclosure.
FIG. 11 is a schematic block diagram of a network information exposure apparatus according to still another embodiment of this disclosure.
FIG. 12 is a schematic block diagram of a network information exposure apparatus according to another embodiment of this disclosure.
FIG. 13 is a schematic block diagram of a network information exposure apparatus according to still another embodiment of this disclosure.
FIG. 14 is a schematic block diagram of a network information exposure apparatus according to another embodiment of this disclosure.
FIG. 15 is a schematic block diagram of an electronic device according to an embodiment of this disclosure.

### DESCRIPTION OF EMBODIMENTS

Exemplary implementations will now be described more thoroughly with reference to the drawings. However, the exemplary implementations may be implemented in various forms, and are not to be understood as being limited to examples described herein. Instead, these implementations are provided to make this disclosure more comprehensive and complete and transfer ideas of the exemplary implementations thoroughly to a person skilled in the art.

In addition, a described feature, structure, or characteristic may be combined to one or more embodiments in any appropriate manner. In the following descriptions, a lot of specific details are provided to give a comprehensive understanding of the embodiments of this disclosure. However, a person of ordinary skill in the art is to be aware that technical solutions in this disclosure may be implemented without one or more of particular details, or another method, component, apparatus, step, or the like may be used. In another case, a well-known method, apparatus, implementation, or operation is not shown or described in detail, in order not to obscure each aspect of this disclosure.

The block diagrams shown in the drawings are merely functional entities and do not necessarily correspond to physically independent entities. That is, the functional entities may be implemented in a software form, or in one or more hardware modules or integrated circuits, or in different networks, processor apparatuses, and/or microcontroller apparatuses.

The flowcharts shown in the drawings are merely exemplary descriptions, do not need to include all content and operations/steps, and do not need to be performed in the described orders either. For example, some operations/steps may be further divided, while some operations/steps may be combined or partially combined. Therefore, an actual execution order may change according to an actual case.

Particularly, according to the embodiments of this disclosure, processes described in the following with reference to the flowcharts may be implemented as computer software programs. For example, an embodiment of this disclosure includes a computer program product, including a computer program born in a computer-readable storage medium. The computer program includes program code for performing methods shown in the flowcharts.

It is to be noted that the computer-readable storage medium shown in this disclosure may be a computer-readable signal medium, a computer-readable storage medium, or any combination thereof. The computer-readable storage medium may be but is not limited to, for example, an electric, magnetic, optical, electromagnetic, infrared, or semi-conductive system, apparatus, or component, or any combination thereof. More specific examples of the computer-readable storage medium may include but are not limited to an electrical connection with one or more wires, a portable computer disk, a hard disk, a random access memory (RAM), a read only memory (ROM), an erasable programmable ROM (EPROM) (or a flash memory), an optical fiber, a portable compact disc ROM (CD-ROM), an optical storage device, a magnetic storage device, or any appropriate combination thereof. In this disclosure, the computer-readable storage medium may be any physical medium containing or storing a program, and the program may be used by or in combination with an instruction execution system, apparatus, or device. In this disclosure, the computer-readable signal medium may include a data signal being in a baseband or propagated as a part of a carrier wave, the data signal carrying computer-readable program code. The data signal propagated in this manner may be of a plurality of forms, including, but not limited to, an electromagnetic signal, an optical signal, or any appropriate combination thereof. The computer-readable signal medium may alternatively be any computer-readable storage medium except the computer-readable storage medium. The computer-readable storage medium may send, propagate, or transmit the program configured to be used by or in combination with the instruction execution system, apparatus, or device. The program code in the computer-readable storage medium may be transmitted with any appropriate medium, including, but not limited to, radio, an electric wire, an optical cable, radio frequency (RF), or any appropriate combination thereof.

The flowcharts and the block diagrams in the drawings illustrate probably implemented system architectures, functions, and operations of the method, the apparatus, and the computer program product according to various embodiments of this disclosure. In this regard, each box in a flowchart or a block diagram may represent a module, a program segment, or a part of code. The module, the program segment, or the part of code includes one or more executable instructions used for implementing designated logic functions. In some alternative implementations, the functions marked in the boxes may be realized in a sequence different from those marked in the drawings. For example, actually two boxes shown in succession may be performed basically in parallel, and sometimes the two boxes may be performed in a reverse sequence. This is determined by a related function. Each box in a block diagram and/or a flowchart and a combination of boxes in the block diagram and/or the flowchart may be implemented by using a dedicated hardware-based system configured to perform a specified function or operation, or may be implemented by using a combination of dedicated hardware and a computer instruction.

A related unit described in the embodiments of this disclosure may be implemented in a software manner, or may be implemented in a hardware manner, and the unit described can also be set in a processor. The name of the unit does not form any limitation on the unit in some cases.

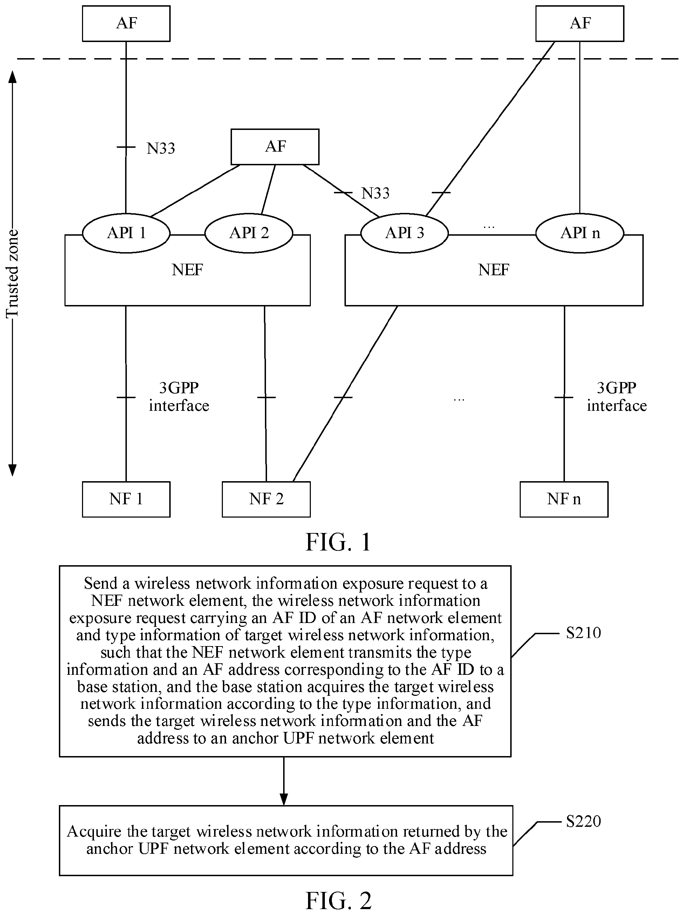

As another aspect, this disclosure also provides a computer-readable storage medium. The computer-readable storage medium may be included in an electronic device described in the foregoing embodiment, or may exist independently and is not assembled in the electronic device. The computer-readable storage medium bears one or more programs. The one or more programs, when executed by the electronic device, enable the electronic device to implement methods described in the following embodiments. For example, the electronic device may implement each step shown in FIG. 2, FIG. 3, FIG. 4, FIG. 5, FIG. 6, FIG. 7, or FIG. 8.

FIG. 1 is a schematic diagram of a 5G network capability exposure architecture.

In the diagram of the capability exposure architecture shown in FIG. 1, a NEF network element interacts with an AF network element through an N33 interface to acquire a capability calling request of the AF and expose corresponding information to the AF according to the capability calling request. The NEF interacts with another network function (NF) (for example, an NF 1, an NF 2, to an NF n shown in FIG. 1, n being a positive integer greater than or equal to 1) of a control plane of a 5G core network through a service interface to acquire specific network information required by the AF.

In the solution shown in FIG. 1, a network capability is exposed to the AF through the NEF. However, a current network capability that may be exposed does not include wireless network information, and capability exposure of the wireless network information cannot be implemented.

In addition, an issue of low-latency network information exposure is proposed in a research subject of multi-access edge computing (MEC) enhancement. Some network information, for example, network congestion information or a real-time user-plane latency, is required to be exposed to an application server in real time. Then, the application server may perform corresponding application-layer processing based on the information. An excessively long calling latency of such network information may make the network information invalid and affect a subsequent application-layer optimization solution.

Based on the technical problems in the related art, an embodiment of this disclosure proposes a network information exposure method.

FIG. 2 is a schematic flowchart of a network information exposure method according to an embodiment of this disclosure. The method provided in the embodiment shown in FIG. 2 may be performed by an electronic device. Specifically, the method is performed by the AF network element in FIG. 1.

As shown in FIG. 2, the method provided in this embodiment of this disclosure may include the following steps.

Step S210: Send a wireless network information exposure request to a NEF network element, the wireless network information exposure request carrying an AF ID of an AF network element and type information of target wireless network information, such that the NEF network element transmits the type information and an AF address corresponding to the AF ID to a base station, and the base station acquires the target wireless network information according to the type information, and sends the target wireless network information and the AF address to an anchor UPF network element.

In this embodiment of this disclosure, the AF identity is abbreviated as AF ID.

In this embodiment of this disclosure, the base station is an interface device through which a mobile device accesses the Internet, and is a radio transceiver station that performs information transmission in a specific radio coverage region with a mobile phone terminal through a mobile communication switching center. In the following embodiments, the base station is represented by a radio access network (RAN). However, this disclosure is not limited thereto.

In this embodiment of this disclosure, the wireless network information exposure request is a request message sent by the AF to request wireless network information to be exposed. The wireless network information requested to be exposed is referred to as the target wireless network information. The type information of the target wireless network information in the wireless network information exposure request is used for indicating a type of the requested target wireless network information. That is, the target wireless network information matches the type information.

In an exemplary embodiment, the type information of the target wireless network information may include at least one of packet error ratio (PER) information, access cell information, and average data bit rate information.

In an exemplary embodiment, the wireless network information exposure request may further include a target network slice and/or a target data network name (DNN). The target wireless network information belongs to a target quality of service (QoS) flow of target user equipment (UE) that creates a target session according to the target network slice and/or the target DNN.

In this embodiment of this disclosure, the target network slice and/or the target DNN that are/is carried in the wireless network information exposure request may alternatively indicate one or some specific sessions that the request target wireless network information is for. The specific session is referred to as a target session hereinafter. The AF may learn the target session by using the wireless network information exposure request. In this embodiment of this disclosure, a session includes a protocol data unit (PDU) session.

A network slice is used for networking on demand. That is, an operator is allowed to determine, through separation, a plurality of virtual end-to-end networks on uniform infrastructure, and logically or physically isolate each network slice in a RAN, a bearer network, and a core network, for adaptation to various types of applications. A network slice may be divided into at least three portions: a RAN sub-slice a bearer network sub-slice, and a core network sub-slice.

In this embodiment of this disclosure, the wireless network information exposure request may carry specific single network slice selection assistance information (S-NSSAI) to indicate the target network slice.

In this embodiment of this disclosure, the wireless network information exposure request further carries a specific DNN, that is, the target DNN.

In this embodiment of this disclosure, the wireless network information is wireless-side capability information, for example, may include the PER information, the access cell information, the average data bit rate information, a transmission latency of a data packet from LTE to a UPF network element, network congestion information, or a real-time user-plane latency.

In an exemplary embodiment, the wireless network information exposure request may further carry an information reporting mode, and the base station reports the target wireless network information according to the information reporting mode.

In an exemplary embodiment, in response to the information reporting mode being periodic reporting, the wireless network information exposure request may further carry a required information reporting period. In response to the information reporting period being satisfied, the base station reports the target wireless network information according to the information reporting period.

In an exemplary embodiment, in response to the information reporting mode being event triggering, the wireless network information exposure request may further carry a defined event. In response to the defined event being satisfied, the base station triggers reporting of the target wireless network information according to the event. The defined event is, for example, a threshold or a quantity of event reporting times.

Step S220: Acquire the target wireless network information returned by the anchor UPF network element according to the AF address.

In an exemplary embodiment, the wireless network information exposure request may further carry request application range information. The operation of acquiring the target wireless network information returned by the anchor UPF network element according to the AF address specifically includes: receiving the target wireless network information satisfying the request application range information from the anchor UPF network element. The request application range information is, for example, information of specific UE or LTE group or all LTE, a specific time period, or a specific geographical range.

In an exemplary embodiment, if the request application range information includes a target UE ID, the operation of receiving the target wireless network information satisfying the request application range information from the anchor UPF network element specifically includes: receiving the target wireless network information of target UE corresponding to the target UE ID. The target UE ID is used for indicating that the wireless network information exposure request is applied to specific UE. The specific UE is referred to as the target UE.

In an exemplary embodiment, if the request application range information includes a target LTE group ID, the operation of receiving the target wireless network information satisfying the request application range information from the anchor UPF network element specifically includes: receiving the target wireless network information of target LTE in a target LTE group corresponding to the target UE group ID. The target UE group ID is used or indicating that the wireless network information exposure request is applied to a specific UE group. The specific UE group is referred to as the target UE group. UE in the specific UE group is referred to as the target UE.

In an exemplary embodiment, if the request application range information includes target time period information, the operation of receiving the target wireless network information satisfying the request application range information from the anchor UPF network element specifically includes: receiving the target wireless network information of target UE satisfying the target time period information.

In an exemplary embodiment, if the request application range information includes target geographical range information, the operation of receiving the target wireless network information satisfying the request application range information from the anchor UPF network element specifically includes: receiving the target wireless network information of target UE in a target geographical range corresponding to the target geographical range information. The target geographical range information is used for indicating that the wireless network information exposure request is applied to a specific geographical range. The specific geographical range is referred as the target geographical range.

In an exemplary embodiment, the operation of acquiring the target wireless network information returned by the anchor UPF network element according to the AF address may include: receiving a network data packet from the anchor UPF network element, the network data packet carrying the target wireless network information, a target UE ID, a destination address, and a source address, and the network data packet being generated by the anchor UPF network element according to a RAN exposure information (REI) container sent by an intermediate UPF network element or the base station.

That is, the anchor UPF network element may receive the REI container from the base station, or may receive the REI container sent by the base station from the intermediate UPF network element. The REI container includes the target wireless network information and the AF address.

In an exemplary embodiment, the destination address is the AF address, and the source address is an anchor UPF address of the anchor UPF network element.

In an exemplary embodiment, the network data packet may further include REI packet header information, and the REI packet header information may indicate that the network data packet includes the target wireless network information.

In an exemplary embodiment, the target wireless network information is encapsulated in the REI container in a data exchange format or a bit stream manner. The data exchange format may be a JavaScript object notation format, a lightweight data exchange format.

In this embodiment of this disclosure, functions of the AF, the NEF, an AMF network element, a session management function (SMF) network element, the base station, and the like are enhanced. The following uses examples for description.

In this embodiment of this disclosure, the AF may support requesting the NEF to exposure wireless network information (referred to as the target wireless network information) of a specific session, for example, the PER information, the access cell information, and the average data bit rate information.

Specifically, the AF may send the wireless network information exposure request to the NEF. The wireless network information exposure request may include a specific wireless network information request, a specific network slice (that is, the target network slice) and/or a specific DNN (that is, the target DNN), and the information reporting mode (for example, periodic reporting or event triggering).

The specific wireless network information request may be indicated by a type ID of the requested target wireless network information. For example, "1" is used for indicating that the PER information is requested to be exposed, "2" is used for indicating that the access cell information is requested to be exposed, and "3" is used for indicating that the average data bit rate information is requested to be exposed.

In this embodiment of this disclosure, the NEF is configured to receive the wireless network information exposure request sent by the AF. The NEF may use the information as one of monitoring capabilities, or new parameter type information of a network that may be exposed, that is, the wireless network information.

The NEF may encapsulate the information into a RAN exposure request container. The RAN exposure request container may include the following information:
the type information of the target wireless network information requested by an AF side, for example, the PER information, the access cell information, or the average data bit rate information; and
the information reporting mode.

In addition, the NEF may also send a subscription request to the SMF to subscribe to a notification message of the SMF. In response to creating the target session corresponding to the target DNN and/or the target network slice, the SMF may send the notification message to the NET to notify the NEF of information about the target UE, for example, an ID including a QoS flow (referred to as a target QoS flow ID).

After receiving the notification information sent by the SMF, the NEF learns that the target session satisfying a condition is already created. The NEF may send the RAN exposure request container to the AMF for the AMF to send to the base station by using an N2 message.

Whether the target session satisfying the condition is already created may be determined according to the information carried in the wireless network information exposure request, for example, whether the target network slice and/or the target DNN are/is satisfied.

For another example, if the wireless network information exposure request sent by the AF includes a specific geographical range limit, the SMF sends the notification message to the NEF only in response to the target LTE in the specific geographical range creating the target session satisfying a condition. Then, the NEF may send the RAN exposure request container to the AMF serving the target UE. The AMF transparently transmits the RAN exposure request container to the base station.

In this embodiment of this disclosure, the AMF is configured to receive the RAN exposure request container sent by the NEF, and transparently transmit the RAN exposure request container to the base station serving the target UE.

In this embodiment of this disclosure, the base station is configured to receive the RAN exposure request container sent by the AMF. The base station may set the RAN exposure request container in the target QoS flow of the target UE.

The base station may detect RAN-side information of the target QoS flow of the target LTE. In response to a reporting condition being satisfied (for example, a reporting period requirement is satisfied or the event is satisfied), the requested target wireless network information is sent to the intermediate UPF through an N3 interface, and then is finally sent to the anchor UPF through an N9 interface. Alternatively, the base station may directly send the requested target wireless network information to the anchor UPF through an N3 interface. The target wireless network information exposed by the RAN and the AF address may be encapsulated to the REI container.

After encapsulating an Internet protocol (IP) address (referred to as a target UE address) of the target LTE to the network data packet including the REI container, the anchor UPF may set an address of the AF (the AF address) as a destination IP address (that is, the destination address) of the corresponding network data packet, set an address of the anchor UPF (referred to as the anchor UPF address) as the source address of the network data packet, and send the network data packet to the AF.

In this embodiment of this disclosure, the anchor UPF may encapsulate the REI packet header information to the network data packet. The REI packet header information may be used for indicating that the network data packet is encapsulated with the target wireless network information.

In this embodiment of this disclosure, after receiving the target wireless network information requested to be exposed, the AF may expose the target wireless network information to an application server in real time. The application server may perform corresponding application-layer processing based on the target wireless network information. For example, if the exposed target wireless network information includes the network congestion information, the real-time user-plane latency, or the like, a resolution of a video may be adjusted, a self-driving level may be changed, or the like. That is, an application layer is optimized.

According to the network information exposure method provided in this implementation of this disclosure, on one hand, the AF network element sends the wireless network information exposure request to the NEF network element. The wireless network information exposure request carries the type information of the target wireless network information and the AF ID of the AF network element. Then, the base station may acquire the requested target wireless network information based on the type information, and then return the target wireless network information acquired by the base station to the AF network element sending the wireless network information exposure request, thereby implementing capability exposure of the wireless network information. On the other hand, a wireless network information exposure latency may be reduced, and a requirement of application-layer processing for a low latency may be met.

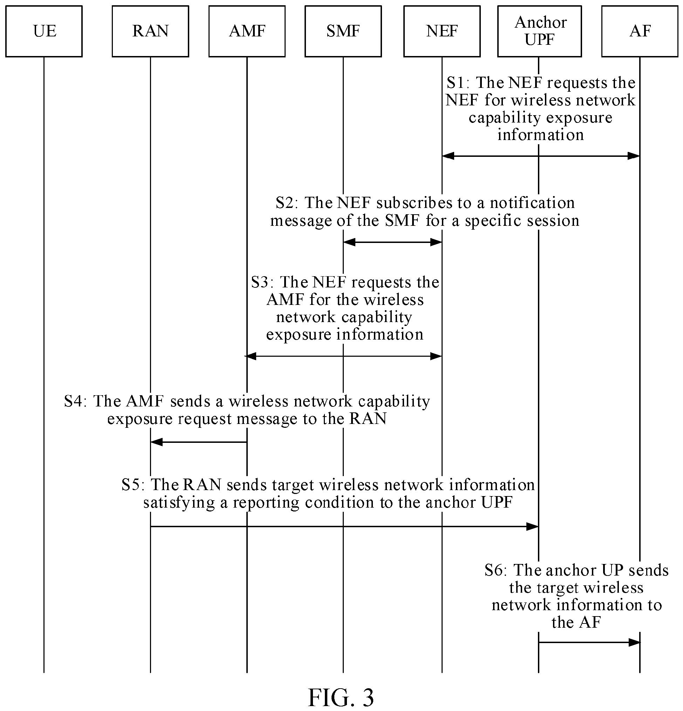

The following uses an example to describe, with reference to FIG. 3, the method provided in the foregoing embodiment.

FIG. 3 is a schematic diagram of interactions in the network information exposure method according to another embodiment of this disclosure.

As shown in FIG. 3, in step S 1, the AF requests the NEF for wireless network capability exposure information (that is, the target wireless network information).

In this embodiment of this disclosure, the AF requests the NEF to expose wireless network capability information of a specific session (the target session). The AF may send the wireless network information exposure request to the NEF. The wireless network information exposure request may include the AF ID, indication information of specific wireless network information (for example, the type information of the target wireless network information), the specific network slice, the specific DNN, the information reporting mode, and the like.

The AF may further indicate an application range of the wireless network information exposure request in the wireless network information exposure request, that is, carries the request application range information, for example, the information of the specific UE or the specific UE group or all the UE, the specific time period, or the specific geographical range.

In this embodiment of this disclosure, after the NEF receives the wireless network information exposure request sent by the AF, the NEF may authenticate, according to a policy of the operator and a protocol (referred to as an AF protocol) between the operator and the AF, the wireless network information exposure request sent by the AF. In response to the wireless network information exposure request passing authentication, the NEF may accept the wireless network information exposure request sent by the AF, and return a request accepting response message to the AF, that is, indicate in the returned response message that the wireless network information exposure request is accepted. In response to the wireless network information exposure request not passing authentication, the NEF may reject the wireless network information exposure request sent by the AF, and return a request rejection response message to the AF, that is, indicate in the returned response message that the wireless network information exposure request is rejected, with a rejection cause value included.

In step S2, the NEF subscribes to the notification message of the SMF for the specific session.

In this embodiment of this disclosure, the NEF may subscribe the notification message of the SMF for the specific session according to the information carried in the wireless network information exposure request sent by the AF. The subscription request sent by the NEF to the SMF may include the specific DNN or the specific network slice carried in the wireless network information exposure request. Optionally, the subscription request may further include a specific UE ID, a specific UE group ID, specific time information, or specific geographical range information.

In response to the subscription request not including the specific UE ID, the subscription request is valid to all the UE. In response to the subscription request including the specific UE ID or the specific UE group ID, the subscription request is valid to only the specific UE or the specific LTE group.

In response to the subscription request including the specific time information, the SMF sends the notification message to the NEF only in response to the subscription request being satisfied in a target time period indicated by the specific time information.

In response to the subscription request including the specific geographical range information, the SMF sends the notification message to the NEF only in response to target UE in the specific geographical range satisfying the subscription request.

According to the subscription request, in response to the target UE creating the target session corresponding to the specific DNN or the specific network slice, and another requirement (for example, the foregoing specific time information) is met, the SMF may send the notification message to the NEF.

In this embodiment of this disclosure, the notification message may include the target LTE ID, an AMF ID, a PDU session ID (that is, the target session ID), a QoS flow ID (that is, the target QoS flow ID), and the like.

In step S3, the NEF requests the AMF for the wireless network capability exposure information (that is, the target wireless network information).

The NEF may encapsulate the wireless network information exposure request received from the AF into the RAN exposure request container, and send the RAN exposure request container, the target UE ID, the PDU session ID, the QoS flow ID, and the like to the AMF.

In step S4, the AMF sends a wireless network capability exposure request message to the RAN.

The AMF may encapsulate the RAN exposure request container, the target UE ID, the PDU session ID, the QoS flow ID, and the like into the wireless network capability exposure request message, and send the wireless network capability exposure request message to the base station.

In step S5, the RAN sends the target wireless network information satisfying the reporting condition to the AMF.

After accepting the wireless network information exposure request, the base station may set the RAN exposure request container in the target QoS flow of the target LTE. In response to detecting that the reporting condition is satisfied, the exposed target wireless network information and the AF address are encapsulated to the REI container. The REI container is finally sent to the anchor UPF (the anchor UPF network element) of a PDU session (that is, the target session) corresponding to the PDU session ID.

In step S6, the anchor UPF sends the target wireless network information to the AF.

The anchor UPF may encapsulate the REI container to an IP data packet (that is, the network data packet), encapsulate the IP address of the UE (that is, the target UE address) to the network data packet including the REI container, further set a destination address of the IP data packet to be an address of the AF, and set a source address to be an address of the anchor UPF (that is, the anchor UPF address). The anchor UPF sends the IP data packet to the AF.

In this embodiment of this disclosure, the anchor UPF may send the IP data packet to the AF directly, or may send the IP data packet to the AF through the NEF.

According to the network information exposure method provided in this implementation of this disclosure, the base station encapsulates a specific data packet with the REI container, so that the exposed target wireless network information may be sent to the anchor UPF by using the REI container and further sent to the AF through the anchor UPF. On one hand, the wireless network information may be exposed. On the other hand, a wireless network information exposure latency is reduced, and a requirement of application-layer processing for a low latency can be met.

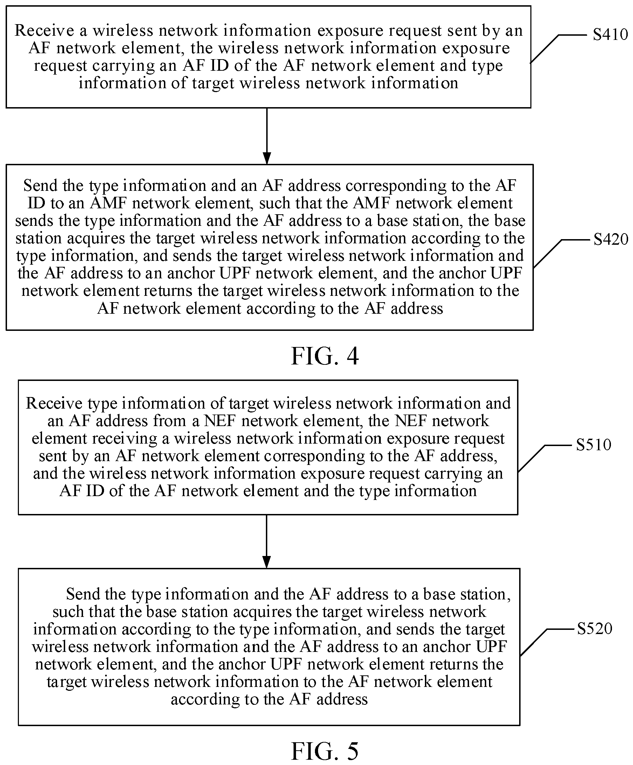

FIG. 4 is a schematic flowchart of a network information exposure method according to another embodiment of this disclosure. The method provided in the embodiment shown in FIG. 4 may be performed by an electronic device, for example, performed by the NEF network element in FIG. 1.

As shown in FIG. 4, the method provided in this embodiment of this disclosure may include the following steps.

Step S410: Receive a wireless network information exposure request sent by an AF network element, the wireless network information exposure request carrying an AF ID of the AF network element and type information of target wireless network information.

Step S420: Send the type information and an AF address corresponding to the AF ID to an AMF network element, such that the AMF network element sends the type information and the AF address to a base station, the base station acquires the target wireless network information according to the type information, and sends the target wireless network information and the AF address to an anchor UPF network element, and the anchor UPF network element returns the target wireless network information to the AF network element according to the AF address.

In an exemplary embodiment, the wireless network information exposure request may further include a target network slice and/or a target DNN.

The operation of sending the type information and an AF address corresponding to the AF ID to an AMF network element may include: sending a subscription request to an SMF network element, the subscription request carrying the target network slice and/or the target DNN; receiving a notification message returned by the SMF network element, the notification message carrying a target LTE ID, an AMF ID, a target session ID, and a target QoS flow ID that correspond to a target session, and the target session being created according to the target network slice and/or the target DNN; and sending the type information, the AF address, the target UE ID, the target session ID, and the target QoS flow ID to the AMF network element corresponding to the AMF ID.

In an exemplary embodiment, the wireless network information exposure request further carries an information reporting mode.

The operation of sending the type information, the AF address, the target UE ID, the target session ID, and the target QoS flow ID to the AMF network element corresponding to the AMF ID may include: generating a RAN exposure request container, the RAN exposure request container including the type information, the information reporting mode, and the AF address; and sending the RAN exposure request container, the target UE ID, the target session ID, and the target QoS flow ID to the AMF network element, such that the AMF network element sends the RAN exposure request container, the target LTE ID, the target session ID, and the target QoS flow ID to the base station.

In an exemplary embodiment, in response to the wireless network information exposure request further carrying request application range information, the subscription request may further carry the request application range information.

The notification message is received, during creation of the target session according to the request application range information, from the SMF network element.

In an exemplary embodiment, in response to the request application range information including the target LTE ID, the notification message is received from the SMF network element during creation of the target session of target UE corresponding to the target UE ID.

In an exemplary embodiment, in response to the request application range information including a target UE group ID, the notification message is received from the SMF network element during creation of the target session of target LTE in a target LTE group corresponding to the target LTE group ID.

In an exemplary embodiment, in response to the request application range information including target time period information, the notification message is received from the SMF network element during creation of the target session of target LTE in a target time period corresponding to the target time period information.

In an exemplary embodiment, in response to the request application range information including target geographical range information, the notification message is received from the SMF network element during creation of the target session of target UE in a target geographical range corresponding to the target geographical range information.

In an exemplary embodiment, the operation of sending a subscription request to an SMF network element may include: authenticating the wireless network information exposure request according to a protocol of the AF network element; and returning a request accepting response message to the AF network element in response to the wireless network information exposure request passing authentication, and sending the subscription request to the SMF network element.

In an exemplary embodiment, the method may further include: returning a request rejection response message to the AF network element in response to the wireless network information exposure request not passing authentication.

FIG. 5 is a schematic flowchart of a network information exposure method according to still another embodiment of this disclosure. The method provided in the embodiment shown in FIG. 5 may be performed by an electronic device, for example, performed by an AMF network element.

As shown in FIG. 5, the method provided in this embodiment of this disclosure may include the following steps.

Step S510: Receive type information of target wireless network information and an AF address from a NEF network element, the NEF network element receiving a wireless network information exposure request sent by an AF network element corresponding to the AF address, and the wireless network information exposure request carrying an AF ID of the AF network element and the type information.

In an exemplary embodiment, the wireless network information exposure request may further carry an information reporting mode.

The operation of receiving type information of target wireless network information and an AF address from a NEF network element may include: receiving a RAN exposure request container, a target UE ID, a target session ID, and a target QoS flow ID that are sent by the NEF network element.

The RAN exposure request container includes the type information, the information reporting mode, and the AF address.

Step S520: Send the type information and the AF address to a base station, such that the base station acquires the target wireless network information according to the type information, and sends the target wireless network information and the AF address to an anchor UPF network element, and the anchor UPF network element returns the target wireless network information to the AF network element according to the AF address.

In an exemplary embodiment, the operation of sending the type information and the AF address to a base station may include: sending the RAN exposure request container, the target UE ID, the target session ID, and the target QoS flow ID to the base station, such that the base station determines a target QoS flow of target LTE according to the target LTE ID and the target QoS flow ID, and sets the RAN exposure request container in the target QoS flow.

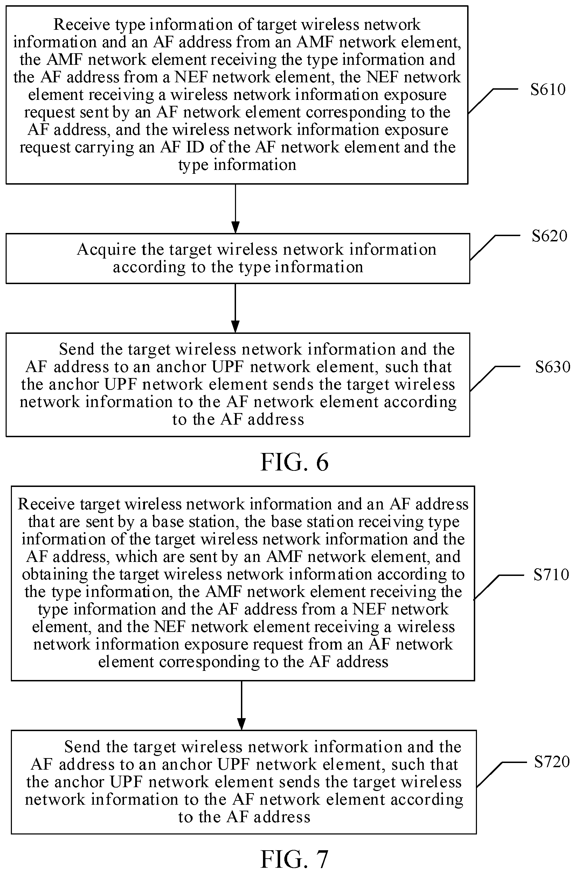

FIG. 6 is a schematic flowchart of a network information exposure method according to another embodiment of this disclosure. The method provided in the embodiment shown in FIG. 6 is performed by an electronic device, for example, performed by a base station.

As shown in FIG. 6, the method provided in this embodiment of this disclosure may include the following steps.

Step S610: Receive type information of target wireless network information and an AF address from an AMF network element, the AMF network element receiving the type information and the AF address from a NEF network element, the NEF network element receiving a wireless network information exposure request sent by an AF network element corresponding to the AF address, and the wireless network information exposure request carrying an AF ID of the AF network element and the type information.

In an exemplary embodiment, the wireless network information exposure request may further carry an information reporting mode.

The operation of receiving type information of target wireless network information and an AF address from an AMF network element may include: receiving a RAN exposure request container, a target LTE ID, a target session ID, and a target QoS flow ID from the AMF network element, the RAN exposure request container including the type information, the information reporting mode, and the AF address.

Step S620: Acquire the target wireless network information according to the type information.

In an exemplary embodiment, the operation of acquiring the target wireless network information according to the type information may include: determining a target QoS flow of target UE according to the target UE ID and the target QoS flow ID, and setting the RAN exposure request container in the target QoS flow, to detect RAN-side information of the target UE to acquire the target wireless network information matching the type information.

Step S630: Send the target wireless network information and the AF address to an anchor UPF network element, such that the anchor UPF network element sends the target wireless network information to the AF network element according to the AF address.

In an exemplary embodiment, the operation of sending the target wireless network information and the AF address to an anchor UPF network element may include: encapsulating the target wireless network information and the AF address to a REI container in response to the information reporting mode being satisfied; and sending the REI container to an intermediate UPF network element or the anchor UPF network element.

In response to the base station sending the REI container to the intermediate UPF network element, the intermediate UPF network element sends the REI container to the anchor UPF network element of a target session corresponding to the target session ID.

In response to the base station sending the REI container to the anchor UPF network element, the anchor UPF network element sends the target wireless network information to the AF network element according to the AF address.

FIG. 7 is a schematic flowchart of a network information exposure method according to still another embodiment of this disclosure. The method provided in the embodiment shown in FIG. 7 may be performed by an electronic device, for example, performed by an intermediate UPF network element.

As shown in FIG. 7, the method provided in this embodiment of this disclosure may include the following steps.

Step S710: Receive target wireless network information and an AF address that are sent by a base station, the base station receiving type information of the target wireless network information and the AF address, which are sent by an AMF network element, and determining the target wireless network information according to the type information, the AMF network element receiving the type information and the AF address from a NEF network element, and the NEF network element receiving a wireless network information exposure request from an AF network element corresponding to the AF address.

In an exemplary embodiment, the operation of receiving target wireless network information and an AF address that are sent by a base station may include: receiving a REI container from the base station, the REI container sent by the base station including the target wireless network information and the AF address.

Step S720: Send the target wireless network information and the AF address to an anchor UPF network element, such that the anchor UPF network element sends the target wireless network information to the AF network element according to the AF address.

In an exemplary embodiment, the operation of sending the target wireless network information and the AF address to an anchor UPF network element includes:
sending the REI container to the anchor UPF network element of a target session, such that the anchor UPF network element encapsulates the target wireless network information in the REI container to a network data packet, encapsulates a target LTE address to the network data packet, sets the AF address as a destination address of the network data packet, sets an anchor UPF address as a source address of the network data packet, and sends the network data packet to the AF network element.

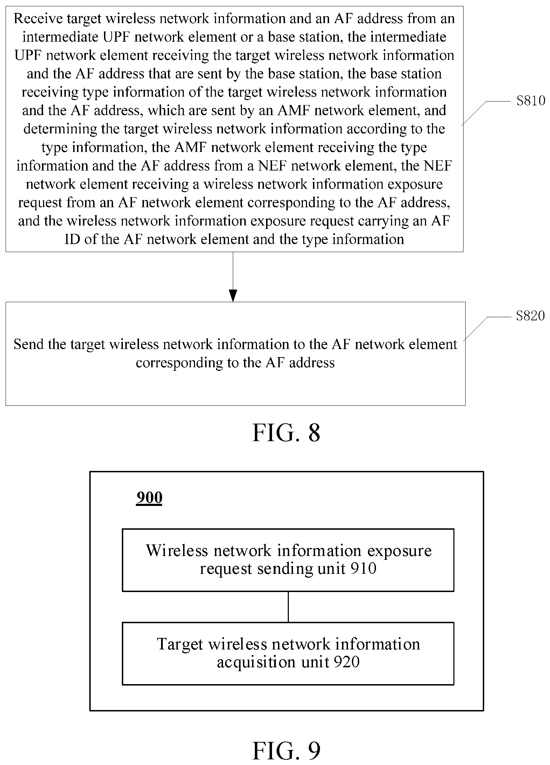

FIG. 8 is a schematic flowchart of a network information exposure method according to another embodiment of this disclosure. The method provided in the embodiment shown in FIG. 8 may be performed by an electronic device, for example, performed by an anchor UPF network element.

As shown in FIG. 8, the method provided in this embodiment of this disclosure may include the following steps.

Step S810: Receive target wireless network information and an AF address from an intermediate UPF network element or a base station, the intermediate UPF network element receiving the target wireless network information and the AF address that are sent by the base station, the base station receiving type information of the target wireless network information and the AF address, which are sent by an AMF network element, and determining the target wireless network information according to the type information, the AMF network element receiving the type information and the AF address from a NEF network element, the NEF network element receiving a wireless network information exposure request from an AF network element corresponding to the AF address, and the wireless network information exposure request carrying an AF ID of the AF network element and the type information.

In an exemplary embodiment, the operation of receiving target wireless network information and an AF address from an intermediate UPF network element or a base station may include: receiving a REI container from the intermediate UPF network element or the base station, the REI container including the target wireless network information and the AF address.

Step S820: Send the target wireless network information to the AF network element corresponding to the AF address.

In an exemplary embodiment, the operation of sending the target wireless network information to the AF network element corresponding to the AF address may include: encapsulating the target wireless network information in the REI container to a network data packet; encapsulating a target LTE address to the network data packet; setting the AF address as a destination address of the network data packet; setting an anchor UPF address of the anchor UPF network element as a source address of the network data packet; and sending the network data packet to the AF network element.

In an exemplary embodiment, before sending the network data packet to the AF network element, the method may further include: encapsulating REI packet header information to the network data packet, the REI packet header information indicating that the network data packet is already encapsulated with the target wireless network information.

In an exemplary embodiment, the target wireless network information may be encapsulated in the REI container in a data exchange format or a bit stream manner.

FIG. 9 is a schematic block diagram of a network information exposure apparatus according to an embodiment of this disclosure. The network information exposure apparatus is an AF network element. Alternatively, the network information exposure apparatus is applied to an AF network element. As shown in FIG. 9, the network information exposure apparatus provided in this embodiment of this disclosure 900 may include a wireless network information exposure request sending unit 910 and a target wireless network information acquisition unit 920.

The wireless network information exposure request sending unit 910 is configured to send a wireless network information exposure request to a NEF network element, the wireless network information exposure request carrying an AF ID of an AF network element and type information of target wireless network information, such that the NEF network element transmits the type information and an AF address corresponding to the AF ID to a base station, and the base station acquires the target wireless network information according to the type information, and sends the target wireless network information and the AF address to an anchor UPF network element.

The target wireless network information acquisition unit 920 is configured to acquire the target wireless network information returned by the anchor UPF network element according to the AF address.

In an exemplary embodiment, the wireless network information exposure request may further include a target network slice and/or a target DNN. The target wireless network information belongs to a target QoS flow of target UE that creates a target session according to the target network slice and/or the target DNN.

In an exemplary embodiment, the type information of the target wireless network information may include at least one of PER information, access cell information, and average data bit rate information.

In an exemplary embodiment, the wireless network information exposure request may further carry an information reporting mode, and the base station reports the target wireless network information according to the information reporting mode.

In an exemplary embodiment, in response to the information reporting mode being periodic reporting, the wireless network information exposure request further carries an information reporting period, and the base station reports the target wireless network information according to the information reporting period.

In an exemplary embodiment, in response to the information reporting mode being event triggering, the wireless network information exposure request further carries an event, and the base station triggers reporting of the target wireless network information according to the event.

In an exemplary embodiment, the wireless network information exposure request may further carry request application range information. The operation of acquiring the target wireless network information returned by the anchor UPF network element according to the AF address includes:
receiving the target wireless network information satisfying the request application range information from the anchor UPF network element.

In an exemplary embodiment, the request application range information includes a target UE ID. The operation of receiving the target wireless network information satisfying the request application range information from the anchor UPF network element includes:
receiving the target wireless network information of target UE corresponding to the target UE ID.

In an exemplary embodiment, the request application range information includes a target LTE group ID. The operation of receiving the target wireless network information satisfying the request application range information from the anchor UPF network element includes:
receiving the target wireless network information of target LTE in a target LTE group corresponding to the target LTE group ID.

In an exemplary embodiment, the request application range information includes target time period information. The operation of receiving the target wireless network information satisfying the request application range information from the anchor UPF network element includes:
receiving the target wireless network information of target UE satisfying the target time period information.

In an exemplary embodiment, the request application range information includes target geographical range information. The operation of receiving the target wireless network information satisfying the request application range information from the anchor UPF network element includes:
receiving the target wireless network information of target UE in a target geographical range corresponding to the target geographical range information.

In an exemplary embodiment, the target wireless network information acquisition unit 920 may include:
a network data packet receiving unit, configured to receive a network data packet from the anchor UPF network element, the network data packet carrying the target wireless network information, a destination address, and a source address, the network data packet being generated by the anchor UPF network element according to a REI container sent by an intermediate UPF network element or the base station, and the REI container including the target wireless network information and the AF application.

The destination address is the AF address. The source address is an anchor UPF address of the anchor UPF network element.

In an exemplary embodiment, the network data packet may further include REI packet header information, and the REI packet header information may indicate that the network data packet includes the target wireless network information.

In an exemplary embodiment, the target wireless network information is encapsulated in the REI container in a data exchange format or a bit stream manner.

Specific implementation of each unit in the AF network element provided in this embodiment of this disclosure may refer to the content in the network information exposure method, and will not be elaborated herein.

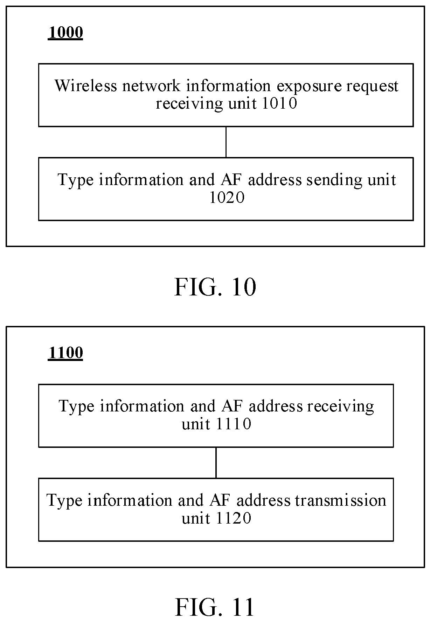

FIG. 10 is a schematic block diagram of a network information exposure apparatus according to another embodiment of this disclosure. The network information exposure apparatus is a NEF network element. Alternatively, the network information exposure apparatus is applied to a NEF network element. As shown in FIG. 10, the network information exposure apparatus 1000 provided in this embodiment of this disclosure may include a wireless network information exposure request receiving unit 1010 and a type information and AF address sending unit 1020.

The wireless network information exposure request receiving unit 1010 is configured to receive a wireless network information exposure request sent by an AF network element, the wireless network information exposure request carrying an AF ID of the AF network element and type information of target wireless network information.

The type information and AF address sensing unit 1020 is configured to send the type information and an AF address corresponding to the AF ID to an AMF network element, such that the AMF network element sends the type information and the AF address to a base station, the base station acquires the target wireless network information according to the type information, and sends the target wireless network information and the AF address to an anchor UPF network element, and the anchor UPF network element returns the target wireless network information to the AF network element according to the AF address.

In an exemplary embodiment, the wireless network information exposure request may further include a target network slice and/or a target DNN.

The type information and AF address sending unit 1020 may include:
a subscription request sending unit, configured to send a subscription request to an SMF network element, the subscription request carrying the target network slice and/or the target DNN;
a notification message receiving unit, configured to receive a notification message returned by the SMF network element, the notification message carrying a target UE ID, an AMF ID, a target session ID, and a target QoS flow ID that correspond to a target session, and the target session being created according to the target network slice and/or the target DNN; and
a target UE information sending unit, configured to send the type information, the AF address, the target LTE ID, the target session ID, and the target QoS flow ID to the AMF network element corresponding to the AMF ID.

In an exemplary embodiment, the wireless network information exposure request may further carry an information reporting mode.

The target UE information sending unit may include:
a RAN exposure request container generation unit, configured to generate a RAN exposure request container according to the wireless network information exposure request, the RAN exposure request container including the type information, the information reporting mode, and the AF address; and
a RAN exposure request container sending unit, configured to send the RAN exposure request container, the target LTE ID, the target session ID, and the target QoS flow ID to the AMF network element, such that the AMF network element sends the RAN exposure request container, the target LTE ID, the target session ID, and the target QoS flow ID to the base station.

In an exemplary embodiment, in response to the wireless network information exposure request further carrying request application range information, the subscription request may further carry the request application range information.

The notification message is received, during creation of the target session according to the request application range information, from the SMF network element.

In an exemplary embodiment, in response to the request application range information including the target LTE ID, the notification message is received from the SMF network element during creation of the target session of target UE corresponding to the target UE ID.

In an exemplary embodiment, in response to the request application range information including a target UE group ID, the notification message is received from the SMF network element during creation of the target session of target LTE in a target LTE group corresponding to the target LTE group ID.

In an exemplary embodiment, in response to the request application range information including target time period information, the notification message is received from the SMF network element during creation of the target session of target LTE in a target time period corresponding to the target time period information.

In an exemplary embodiment, in response to the request application range information including target geographical range information, the notification message is received from the SMF network element during creation of the target session of target UE in a target geographical range corresponding to the target geographical range information.

In an exemplary embodiment, the subscription request sending unit may include:
a request authentication unit, configured to authenticate the wireless network information exposure request according to a protocol of the AF network element;
a request accepting unit, configured to return a request accepting response message to the AF network element in response to the wireless network information exposure request passing authentication; and
a subscription request transmission unit, configured to send the subscription request to the SMF network element.

In an exemplary embodiment, the NEF network element 1000 may further include:
a request rejection unit, configured to return a request rejection response message to the AF network element in response to the wireless network information exposure request not passing authentication.

Specific implementation of each unit in the NEF network element provided in this embodiment of this disclosure may refer to the content in the network information exposure method, and will not be elaborated herein.

FIG. 11 is a schematic block diagram of a network information exposure apparatus according to still another embodiment of this disclosure. The network information exposure apparatus is an AMF network element. Alternatively, the network information exposure apparatus is applied to an AMF network element. As shown in FIG. 11, the network information exposure apparatus 1100 provided in this embodiment of this disclosure may include a type information and AF address receiving unit 1110 and a type information and AF address transmission unit 1120.

The type information and AF address receiving unit 1110 is configured to receive type information of target wireless network information and an AF address from a NEF network element, the NEF network element being configured to receive a wireless network information exposure request sent by an AF network element corresponding to the AF address, and the wireless network information exposure request carrying an AF ID of the AF network element and the type information.

The type information and AF address transmission unit 1120 is configured to send the type information and the AF address to a base station, such that the base station acquires the target wireless network information according to the type information, and sends the target wireless network information and the AF address to an anchor UPF network element, and the anchor UPF network element returns the target wireless network information to the AF network element according to the AF address.

In an exemplary embodiment, the wireless network information exposure request may further carry an information reporting mode.

The type information and AF address receiving unit 1110 may include:
a RAN exposure request container receiving unit, configured to receive receiving a RAN exposure request container, a target LTE ID, a target session ID, and a target QoS flow ID that are sent by the NEF network element, the RAN exposure request container sent by the NEF network element including the type information, the information reporting mode, and the AF address.

In an exemplary embodiment, the type information and AF address transmission unit 1120 may include:
a RAN exposure request container forwarding unit, configured to send the RAN exposure request container, the target LTE ID, the target session ID, and the target QoS flow ID to the base station, such that the base station determines a target QoS flow of target LTE according to the target UE ID and the target QoS flow ID, and sets the RAN exposure request container in the target QoS flow.

Specific implementation of each unit in the AMF network element provided in this embodiment of this disclosure may refer to the content in the network information exposure method, and will not be elaborated herein.

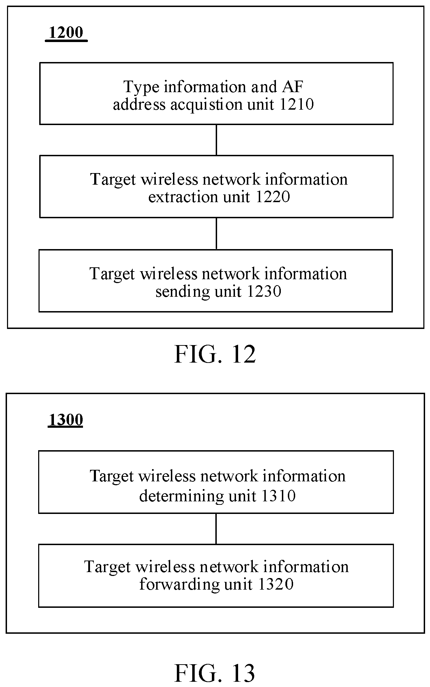

FIG. 12 is a schematic block diagram of a network information exposure apparatus according to another embodiment of this disclosure. The network information exposure apparatus is a base station. Alternatively, the network information exposure apparatus is applied to a base station.

As shown in FIG. 12, the network information exposure apparatus 1200 provided in this embodiment of this disclosure may include a type information and AF address acquisition unit 1210, a target wireless network information extraction unit 1220, and a target wireless network information sending unit 1230.

The type information and AF address acquisition unit 1210 is configured to receive type information of target wireless network information and an AF address from an AMF network element, the AMF network element receiving the type information and the AF address from a NEF network element, the NEF network element receiving a wireless network information exposure request sent by an AF network element corresponding to the AF address, and the wireless network information exposure request carrying an AF ID of the AF network element and the type information.

The target wireless network information extraction unit 1220 is configured to acquire the target wireless network information according to the type information.

The target wireless network information sending unit 1230 is configured to send the target wireless network information and the AF address to an anchor UPF network element, such that the anchor UPF network element sends the target wireless network information to the AF network element according to the AF address.

In an exemplary embodiment, the wireless network information exposure request may further carry an information reporting mode.

The type information and AF address acquisition unit 1210 may include: a target UE related information determining unit, configured to receive a RAN exposure request container, a target UE ID, a target session ID, and a target QoS flow ID from the AMF network element, the RAN exposure request container including the type information, the information reporting mode, and the AF address.

In an exemplary embodiment, the target wireless network information extraction unit 1220 may include:
a RAN exposure request container setting unit, configured to determine a target QoS flow of target UE according to the target UE ID and the target QoS flow ID, and set the RAN exposure request container in the target QoS flow, to detect RAN-side information of the target UE to acquire the target wireless network information matching the type information.

In an exemplary embodiment, the target wireless network information sending unit 1230 may include:
a target wireless network information encapsulation unit, configured to encapsulate the target wireless network information and the AF address to a REI container in response to the information reporting mode being satisfied; and
a target wireless network information carrying unit, configured to send the REI container to an intermediate UPF network element or the anchor UPF network element.

In response to a base station sending the REI container to the intermediate UPF network element, the intermediate UPF network element sends the REI container to the anchor UPF network element of a target session corresponding to the target session ID.

In response to a base station sending the REI container to the anchor UPF network element, the anchor UPF network element sends the target wireless network information to the AF network element according to the AF address.

Specific implementation of each unit in the base station provided in this embodiment of this disclosure may refer to the content in the network information exposure method, and will not be elaborated herein.

FIG. 13 is a schematic block diagram of a network information exposure apparatus according to still another embodiment of this disclosure. The network information exposure apparatus is an intermediate UPF network element. Alternatively, the network information exposure apparatus is applied to an intermediate UPF network element.

As shown in FIG. 13, the network information exposure apparatus 1300 provided in this embodiment of this disclosure may include a target wireless network information determining unit 1310 and a target wireless network information forwarding unit 1320.

The target wireless network information determining unit 1310 is configured to receive target wireless network information and an AF address that are sent by a base station, the base station receiving type information of the target wireless network information and the AF address, which are sent by an AMF network element, and determining the target wireless network information according to the type information, the AMF network element receiving the type information and the AF address from a NEF network element, the NEF network element receiving a wireless network information exposure request from an AF network element corresponding to the AF address, and the wireless network information exposure request carrying an AF ID of the AF network element and the type information.

The target wireless network information forwarding unit 1320 is configured to send the target wireless network information and the AF address to an anchor UPF network element, such that the anchor UPF network element sends the target wireless network information to the AF network element according to the AF address.

In an exemplary embodiment, the target wireless network information determining unit 1310 may include:
an AF address receiving unit, configured to receive a REI container from the base station, the REI container sent by the base station including the target wireless network information and the AF address.

In an exemplary embodiment, the target wireless network information forwarding unit 1320 may include:
a target LTE address sending unit, configured to send the REI container to the anchor UPF network element of a target session, such that the anchor UPF network element encapsulates the target wireless network information in the REI container to a network data packet, encapsulates a target UE address to the network data packet, sets the AF address as a destination address of the network data packet, sets an anchor UPF address as a source address of the network data packet, and sends the network data packet to the AF network element.

Specific implementation of each unit in the intermediate UPF network element provided in this embodiment of this disclosure may refer to the content in the network information exposure method, and will not be elaborated herein.

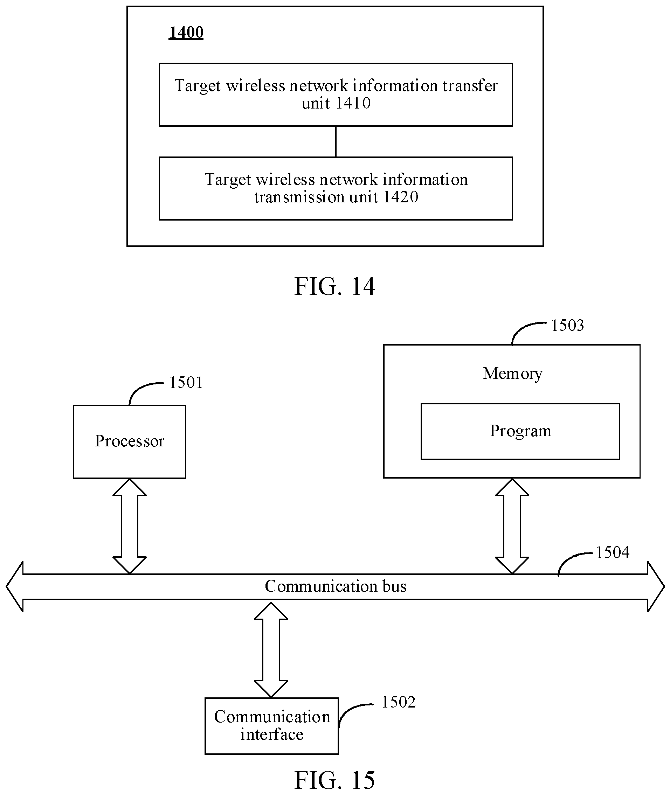

FIG. 14 is a schematic block diagram of a network information exposure apparatus according to another embodiment of this disclosure. The network information exposure apparatus is an anchor UPF network element. Alternatively, the network information exposure apparatus is applied to an anchor UPF network element. As shown in FIG. 14, the network information exposure apparatus 1400 provided in this embodiment of this disclosure may include a target wireless network information transfer unit 1410 and a target wireless network information transmission unit 1420.

The target wireless network information transfer unit 1410 is configured to receive target wireless network information and an AF address from an intermediate UPF network element or a base station, the intermediate UPF network element receiving the target wireless network information and the AF address that are sent by the base station, the base station receiving type information of the target wireless network information and the AF address, which are sent by an AMF network element, and determining the target wireless network information according to the type information, the AMF network element receiving the type information and the AF address from a NEF network element, the NEF network element receiving a wireless network information exposure request from an AF network element corresponding to the AF address, and the wireless network information exposure request carrying an AF ID of the AF network element and the type information.

The target wireless network information transmission unit 1420 is configured to send the target wireless network information to the AF network element corresponding to the AF address.

In an exemplary embodiment, the target wireless network information transfer unit 1410 may be configured to receive a REI container from the intermediate UPF network element or the base station, the REI container including the target wireless network information and the AF address.

In an exemplary embodiment, the target wireless network information transmission unit 1420 may be configured to: encapsulate the target wireless network information in the REI container to a network data packet; encapsulate a target UE address to the network data packet; set the AF address as a destination address of the network data packet; set an anchor UPF address of the anchor UPF network element as a source address of the network data packet; and send the network data packet to the AF network element.

In an exemplary embodiment, the anchor UPF network element 1400 may further include: a packet header information encapsulation unit, configured, before sending of the network data packet to the AF network element, encapsulate REI packet header information to the network data packet, the REI packet header information indicating that the network data packet is already encapsulated with the target wireless network information.

In an exemplary embodiment, the target wireless network information may be encapsulated in the REI container in a data exchange format or a bit stream manner.

Specific implementation of each unit in the anchor UPF network element provided in this embodiment of this disclosure may refer to the content in the network information exposure method, and will not be elaborated herein.

The following refer to FIG. 15. FIG. 15 is a schematic diagram of a structure of an electronic device configured to implement the embodiments of this disclosure. The electronic device shown in FIG. 15 is merely an example and not intended to form any limitation on functions and application scopes of the embodiments of this disclosure. The electronic device in FIG. 15 may include an off-line server and a service server.

Refer to FIG. 15. The electronic device provided in this embodiment of this disclosure may include a processor 1501, a communication interface 1502, a memory 1503, and a communication bus 1504.

The processor 1501, the communication interface 1502, and the memory 1503 communicate with one another through the communication bus 1504.

Optionally, the communication interface 1502 may be an interface of a communication module, for example, an interface of a global system for mobile communications (GSM) module. The processor 1501 is configured to execute a program. The memory 1503 is configured to store the program. The program may include a computer program. The computer program include computer operation instructions. The program may include a program of a video client.

The processor 1501 may be a central processing unit (CPU), an application specific integrated circuit (ASIC), or one or more integrated circuits configured to implement the embodiments of this disclosure.

The memory 1503 may include a high-speed random access memory (RAM), or may include a non-volatile memory, for example, at least one disk memory.

The program is specifically used for: sending a wireless network information exposure request to a NEF network element, the wireless network information exposure request carrying an AF ID of an AF network element and type information of target wireless network information, such that the NEF network element transmits the type information and an AF address corresponding to the AF ID to a base station, and the base station acquires the target wireless network information according to the type information, and sends the target wireless network information and the AF address to an anchor UPF network element; and acquiring the target wireless network information returned by the anchor UPF network element according to the AF address.

Alternatively, the procedure may specifically be used for: receiving a wireless network information exposure request sent by an AF network element, the wireless network information exposure request carrying an AF ID of the AF network element and type information of target wireless network information; and sending the type information and an AF address corresponding to the AF ID to an AMF network element, such that the AMF network element sends the type information and the AF address to a base station, the base station acquires the target wireless network information according to the type information, and sends the target wireless network information and the AF address to an anchor UPF network element, and the anchor UPF network element returns the target wireless network information to the AF network element according to the AF address.

Alternatively, the procedure may specifically be used for: receiving type information of target wireless network information and an AF address from a NEF network element, the NEF network element receiving a wireless network information exposure request sent by an AF network element corresponding to the AF address, and the wireless network information exposure request carrying an AF ID of the AF network element and the type information; and
sending the type information and the AF address to a base station, such that the base station acquires the target wireless network information according to the type information, and sends the target wireless network information and the AF address to an anchor UPF network element, and the anchor UPF network element returns the target wireless network information to the AF network element according to the AF address.

Alternatively, the procedure may specifically be used for: receiving type information of target wireless network information and an application function (AF) address from an AMF network element, the AMF network element receiving the type information and the AF address from a NEF network element, the NEF network element receiving a wireless network information exposure request sent by an AF network element corresponding to the AF address, and the wireless network information exposure request carrying an AF ID of the AF network element and the type information; acquiring the target wireless network information according to the type information; and sending the target wireless network information and the AF address to an anchor UPF network element, such that the anchor UPF network element sends the target wireless network information to the AF network element according to the AF address.

Alternatively, the procedure may specifically be used for: receiving target wireless network information and an AF address that are sent by a base station, the base station receiving type information of the target wireless network information and the AF address, which are sent by an AMF network element, and determining the target wireless network information according to the type information, the AMF network element receiving the type information and the AF address from a NEF network element, the NEF network element receiving a wireless network information exposure request from an AF network element corresponding to the AF address, and the wireless network information exposure request carrying an AF ID of the AF network element and the type information; and sending the target wireless network information and the AF address to an anchor UPF network element, such that the anchor UPF network element sends the target wireless network information to the AF network element according to the AF address.

Alternatively, the procedure may specifically be used for: receiving target wireless network information and an AF address from an intermediate UPF network element or a base station, the intermediate UPF network element receiving the target wireless network information and the AF address that are sent by the base station, the base station receiving type information of the target wireless network information and the AF address, which are sent by an AMF network element, and determining the target wireless network information according to the type information, the AMF network element receiving the type information and the AF address from a NEF network element, the NEF network element receiving a wireless network information exposure request from an AF network element corresponding to the AF address, and the wireless network information exposure request carrying an AF ID of the AF network element and the type information; and
sending the target wireless network information to the AF network element corresponding to the AF address.

Although a plurality of units of a device for action execution are mentioned in the above detailed descriptions, such division is not mandatory. In practice, features and functions of two or more units described above may be embodied in one unit according to the implementations of this disclosure. Conversely, the feature and the function of one unit described above may further be embodied as a plurality of units.

According to the foregoing descriptions of the implementations, a person skilled in the art may readily understand that the exemplary implementations described herein may be implemented by using software, or may be implemented by combining software and necessary hardware. Therefore, the technical solutions of the embodiments of this disclosure may be implemented in a form of a software product. The software product may be stored in a non-volatile storage medium (which may be a CD-ROM, a USB flash drive, a removable hard disk, or the like) or on the network, including several instructions for instructing a computing device (which may be a personal computer, a server, a touch terminal, a network device, or the like) to perform the methods according to the embodiments of this disclosure.

Other implementation solutions of this disclosure are apparent to a person skilled in the art upon considering the specification and practicing the disclosure disclosed herein. This disclosure is intended to cover any transformations, uses, or adaptive variations of this disclosure. These transformations, uses, or adaptive variations follow a general principle of this disclosure, and include common general knowledge or technical means undisclosed in this disclosure in this art. The specification and the embodiments are merely considered as examples, and a practical scope and a spirit of this disclosure are pointed out in the appended claims.

It is to be understood that this disclosure is not limited to precise structures described above and shown in the drawings, and various modifications and variations may be made without departing from the scope thereof. The scope of this disclosure is defined by only the appended claims.

## Claims

1. A network information exposure method, performed by an electronic device and comprising:
sending a wireless network information exposure request to a network exposure function (NEF) network element, the wireless network information exposure request carrying an application function (AF) identity (ID) of an AF network element and type information of target wireless network information, wherein the NEF network element transmits the type information and an AF address corresponding to the AF ID to a base station, and the base station acquires the target wireless network information according to the type information, and sends the target wireless network information and the AF address to an anchor user plane function (UPF) network element; and
acquiring the target wireless network information returned by the anchor UPF network element according to the AF address.

2. The method according to claim 1, wherein the wireless network information exposure request further comprises a target network slice and/or a target data network name (DNN), and the target wireless network information belongs to a target quality of service (QoS) flow of target user equipment (UE) that creates a target session according to the target network slice and/or the target DNN.

3. The method according to claim 1, wherein the type information comprises at least one of packet error ratio (PER) information, access cell information, or average data bit rate information.

4. The method according to claim 1, wherein the wireless network information exposure request further carries an information reporting mode, and the base station reports the target wireless network information according to the information reporting mode.

5. The method according to claim 4, wherein in response to the information reporting mode being periodic reporting, the wireless network information exposure request further carries an information reporting period, and the base station reports the target wireless network information according to the information reporting period.

6. The method according to claim 4, wherein in response to the information reporting mode being event triggering, the wireless network information exposure request further carries an event, and the base station triggers reporting of the target wireless network information according to the event.

7. The method according to claim 1, wherein the wireless network information exposure request further carries request application range information, and the acquiring the target wireless network information returned by the anchor UPF network element according to the AF address comprises:
receiving the target wireless network information satisfying the request application range information from the anchor UPF network element.

8. The method according to claim 7, wherein the request application range information comprises a target UE ID, and the receiving the target wireless network information satisfying the request application range information from the anchor UPF network element comprises:
receiving the target wireless network information of target UE corresponding to the target UE ID.

9. The method according to claim 7, wherein the request application range information comprises a target LTE group ID, and the receiving the target wireless network information satisfying the request application range information from the anchor UPF network element comprises:
receiving the target wireless network information of target LTE in a target UE group corresponding to the target UE group ID.

10. The method according to claim 7, wherein the request application range information comprises target time period information, and the receiving the target wireless network information satisfying the request application range information from the anchor UPF network element comprises:
receiving the target wireless network information of target LTE satisfying the target time period information.

11. The method according to claim 7, wherein the request application range information comprises target geographical range information, and the receiving the target wireless network information satisfying the request application range information from the anchor UPF network element comprises:
receiving the target wireless network information of target UE in a target geographical range corresponding to the target geographical range information.

12. The method according to claim 1, wherein the acquiring the target wireless network information returned by the anchor UPF network element according to the AF address comprises:
receiving a network data packet from the anchor UPF network element, the network data packet carrying the target wireless network information, a destination address, and a source address, the network data packet being generated by the anchor UPF network element according to a radio access network (RAN) exposure information (REI) container sent by an intermediate UPF network element or the base station, and the REI container comprising the target wireless network information and the AF application,
the destination address being the AF address, and the source address being an anchor UPF address of the anchor UPF network element.

13. The method according to claim 12, wherein the network data packet further comprises REI packet header information, and the REI packet header information indicates that the network data packet comprises the target wireless network information.

14. The method according to claim 12, wherein the target wireless network information is encapsulated in the REI container in a data exchange format or a bit stream manner.

15. A network information exposure method, performed by an electronic device and comprising:
receiving a wireless network information exposure request sent by an application function (AF) network element, the wireless network information exposure request carrying an AF identity (ID) of the AF network element and type information of target wireless network information; and
sending the type information and an AF address corresponding to the AF ID to an access and mobility management function (AMF) network element, wherein the AMF network element sends the type information and the AF address to a base station, the base station acquires the target wireless network information according to the type information, and sends the target wireless network information and the AF address to an anchor user plane function (UPF) network element, and the anchor UPF network element returns the target wireless network information to the AF network element according to the AF address.

16. The method according to claim 15, wherein the wireless network information exposure request further comprises a target network slice and/or a target data network name (DNN); and the sending the type information and an AF address corresponding to the AF ID to an AMF network element comprises:
sending a subscription request to a session management function (SMF) network element, the subscription request carrying the target network slice and/or the target DNN;
receiving a notification message returned by the SMF network element, the notification message carrying a target user equipment (UE) ID, an AMF ID, a target session ID, and a target quality of service (QoS) flow ID that correspond to a target session, and the target session being created according to the target network slice and/or the target DNN; and
sending the type information, the AF address, the target UE ID, the target session ID, and the target QoS flow ID to the AMF network element corresponding to the AMF ID.

17. The method according to claim 16, wherein the wireless network information exposure request further carries an information reporting mode; and the sending the type information, the AF address, the target LTE ID, the target session ID, and the target QoS flow ID to the AMF network element corresponding to the AMF ID comprises:
generating a radio access network (RAN) exposure request container, the RAN exposure request container comprising the type information, the information reporting mode, and the AF address; and
sending the RAN exposure request container, the target UE ID, the target session ID, and the target QoS flow ID to the AMF network element, wherein the AMF network element sends the RAN exposure request container, the target LTE ID, the target session ID, and the target QoS flow ID to the base station.

18. The method according to claim 16, wherein in response to the wireless network information exposure request further carrying request application range information, the subscription request further carries the request application range information; and the notification message is received, during creation of the target session according to the request application range information, from the SMF network element.

19. The method according to claim 18, wherein in response to the request application range information comprising the target UE ID, the notification message is received from the SMF network element during creation of the target session of target UE corresponding to the target UE ID.

20. The method according to claim 18, wherein in response to the request application range information comprising a target UE group ID, the notification message is received from the SMF network element during creation of the target session of target LTE in a target UE group corresponding to the target UE group ID.

21. The method according to claim 18, wherein in response to the request application range information comprising target time period information, the notification message is received from the SMF network element during creation of the target session of target LTE in a target time period corresponding to the target time period information.

22. The method according to claim 18, wherein in response to the request application range information comprising target geographical range information, the notification message is received from the SMF network element during creation of the target session of target UE in a target geographical range corresponding to the target geographical range information.

23. The method according to claim 16, wherein the sending a subscription request to an SMF network element comprises:
authenticating the wireless network information exposure request according to a protocol of the AF network element; and
returning a request accepting response message to the AF network element in response to the wireless network information exposure request passing authentication, and sending the subscription request to the SMF network element.

24. The method according to claim 23, further comprising:
returning a request rejection response message to the AF network element in response to the wireless network information exposure request not passing authentication.

25. A network information exposure method, performed by an electronic device and comprising:
receiving type information of target wireless network information and an application function (AF) address from a network exposure function (NEF) network element, the NEF network element receiving a wireless network information exposure request sent by an AF network element corresponding to the AF address, and the wireless network information exposure request carrying an AF identity (ID) of the AF network element and the type information; and
sending the type information and the AF address to a base station, wherein the base station acquires the target wireless network information according to the type information, and sends the target wireless network information and the AF address to an anchor user plane function (UPF) network element, and the anchor UPF network element returns the target wireless network information to the AF network element according to the AF address.

26. The method according to claim 25, wherein the wireless network information exposure request further carries an information reporting mode; the receiving type information of target wireless network information and an AF address from a NEF network element comprises:
receiving a radio access network (RAN) exposure request container, a target user equipment (UE) ID, a target session ID, and a target quality of service (QoS) flow ID that are sent by the NEF network element, the RAN exposure request container comprising the type information, the information reporting mode, and the AF address; and
the sending the type information and the AF address to a base station comprises:
sending the RAN exposure request container, the target UE ID, the target session ID, and the target QoS flow ID to the base station, wherein the base station determines a target QoS flow of target UE according to the target UE ID and the target QoS flow ID, and sets the RAN exposure request container in the target QoS flow.

27. A network information exposure method, performed by an electronic device and comprising:
receiving type information of target wireless network information and an application function (AF) address from an access and mobility management function (AMF) network element, the AMF network element receiving the type information and the AF address from a network exposure function (NEF) network element, the NEF network element receiving a wireless network information exposure request sent by an AF network element corresponding to the AF address, and the wireless network information exposure request carrying an AF identity (ID) of the AF network element and the type information;
acquiring the target wireless network information according to the type information; and
sending the target wireless network information and the AF address to an anchor user plane function (UPF) network element, wherein the anchor UPF network element sends the target wireless network information to the AF network element according to the AF address.

28. The method according to claim 27, wherein the wireless network information exposure request further carries an information reporting mode; the receiving type information of target wireless network information and an AF address from an AMF network element comprises:
receiving a radio access network (RAN) exposure request container, a target user equipment (UE) ID, a target session ID, and a target quality of service (QoS) flow ID from the AMF network element, the RAN exposure request container comprising the type information, the information reporting mode, and the AF address; and
the acquiring the target wireless network information according to the type information comprises:
determining a target QoS flow of target LTE according to the target LTE ID and the target QoS flow ID, and setting the RAN exposure request container in the target QoS flow, to detect RAN-side information of the target UE to acquire the target wireless network information matching the type information.

29. The method according to claim 28, wherein the sending the target wireless network information and the AF address to an anchor UPF network element comprises:
encapsulating the target wireless network information and the AF address to a RAN exposure information (REI) container in response to the information reporting mode being satisfied; and
sending the REI container to an intermediate UPF network element or the anchor UPF network element, wherein
in response to a base station sending the REI container to the intermediate UPF network element, the intermediate UPF network element sends the REI container to the anchor UPF network element of a target session corresponding to the target session ID; or
in response to a base station sending the REI container to the anchor UPF network element, the anchor UPF network element sends the target wireless network information to the AF network element according to the AF address.

30. A network information exposure method, performed by an electronic device and comprising:
receiving target wireless network information and an application function (AF) address that are sent by a base station, the base station receiving type information of the target wireless network information and the AF address, which are sent by an access and mobility management function (AMF) network element, and determining the target wireless network information according to the type information, the AMF network element receiving the type information and the AF address from a network exposure function (NEF) network element, the NEF network element receiving a wireless network information exposure request from an AF network element corresponding to the AF address, and the wireless network information exposure request carrying an AF identity (ID) of the AF network element and the type information; and
sending the target wireless network information and the AF address to an anchor user plane function (UPF) network element, wherein the anchor UPF network element sends the target wireless network information to the AF network element according to the AF address.

31. The method according to claim 30, wherein the receiving target wireless network information and an AF address that are sent by a base station comprises:
receiving a radio access network (RAN) exposure information (REI) container from the base station, the REI container comprising the target wireless network information and the AF address; and
the sending the target wireless network information and the AF address to an anchor UPF network element comprises:
sending the REI container to the anchor UPF network element of a target session, wherein the anchor UPF network element encapsulates the target wireless network information in the REI container to a network data packet, encapsulates a target user equipment (UE) address to the network data packet, sets the AF address as a destination address of the network data packet, sets an anchor UPF address as a source address of the network data packet, and sends the network data packet to the AF network element.

32. A network information exposure method, performed by an electronic device and comprising:
receiving target wireless network information and an application function (AF) address from an intermediate user plane function (UPF) network element or a base station, the intermediate UPF network element receiving the target wireless network information and the AF address that are sent by the base station, the base station receiving type information of the target wireless network information and the AF address, which are sent by an access and mobility management function (AMF) network element, and determining the target wireless network information according to the type information, the AMF network element receiving the type information and the AF address from a network exposure function (NEF) network element, the NEF network element receiving a wireless network information exposure request from an AF network element corresponding to the AF address, and the wireless network information exposure request carrying an AF identity (ID) of the AF network element and the type information; and
sending the target wireless network information to the AF network element corresponding to the AF address.

33. The method according to claim 32, wherein the receiving target wireless network information and an AF address from an intermediate UPF network element or a base station comprises:
receiving a radio access network (RAN) exposure information (REI) container from the intermediate UPF network element or the base station, the REI container comprising the target wireless network information and the AF address; and
the sending the target wireless network information to the AF network element corresponding to the AF address comprises:
encapsulating the target wireless network information in the REI container to a network data packet;
encapsulating a target user equipment (UE) address to the network data packet;
setting the AF address as a destination address of the network data packet;
setting an anchor UPF address of the anchor UPF network element as a source address of the network data packet; and
sending the network data packet to the AF network element.

34. The method according to claim 33, wherein before sending the network data packet to the AF network element, the method further comprises:
encapsulating REI packet header information to the network data packet, the REI packet header information indicating that the network data packet is already encapsulated with the target wireless network information.

35. The method according to claim 33, wherein the target wireless network information is encapsulated in the REI container in a data exchange format or a bit stream manner.

36. A network information exposure apparatus, comprising:
a wireless network information exposure request sending unit, configured to send a wireless network information exposure request to a network exposure function (NEF) network element, the wireless network information exposure request carrying an application function (AF) identity (ID) of an AF network element and type information of target wireless network information, wherein the NEF network element transmits the type information and an AF address corresponding to the AF ID to a base station, and the base station acquires the target wireless network information according to the type information, and sends the target wireless network information and the AF address to an anchor user plane function (UPF) network element; and
a target wireless network information acquisition unit, configured to acquire the target wireless network information returned by the anchor UPF network element according to the AF address.

37. A network information exposure apparatus, comprising:
a wireless network information exposure request receiving unit, configured to receive a wireless network information exposure request sent by an application function (AF) network element, the wireless network information exposure request carrying an AF identity (ID) of the AF network element and type information of target wireless network information; and
a type information and AF address sensing unit, configured to send the type information and an AF address corresponding to the AF ID to an access and mobility management function (AMF) network element, wherein the AMF network element sends the type information and the AF address to a base station, the base station acquires the target wireless network information according to the type information, and sends the target wireless network information and the AF address to an anchor user plane function (UPF) network element, and the anchor UPF network element returns the target wireless network information to the AF network element according to the AF address.

38. A network information exposure apparatus, comprising:
a type information and application function (AF) address receiving unit, configured to receive type information of target wireless network information and an AF address from a network exposure function (NEF) network element, the NEF network element receiving a wireless network information exposure request sent by an AF network element corresponding to the AF address, and the wireless network information exposure request carrying an AF identity (ID) of the AF network element and the type information; and
a type information and AF address transmission unit, configured to send the type information and the AF address to a base station, wherein the base station acquires the target wireless network information according to the type information, and sends the target wireless network information and the AF address to an anchor user plane function (UPF) network element, and the anchor UPF network element returns the target wireless network information to the AF network element according to the AF address.

39. A network information exposure apparatus, comprising:
a type information and application function (AF) address acquisition unit, configured to receive type information of target wireless network information and an AF address from an access and mobility management function (AMF) network element, the AMF network element receiving the type information and the AF address from a network exposure function (NEF) network element, the NEF network element receiving a wireless network information exposure request sent by an AF network element corresponding to the AF address, and the wireless network information exposure request carrying an AF identity (ID) of the AF network element and the type information;
a target wireless network information extraction unit, configured to acquire the target wireless network information according to the type information; and
a target wireless network information sending unit, configured to send the target wireless network information and the AF address to an anchor user plane function (UPF) network element, wherein the anchor UPF network element sends the target wireless network information to the AF network element according to the AF address.

40. A network information exposure apparatus, comprising:
a target wireless network information determining unit, configured to receive target wireless network information and an application function (AF) address that are sent by a base station, the base station receiving type information of the target wireless network information and the AF address, which are sent by an access and mobility management function (AMF) network element, and determining the target wireless network information according to the type information, the AMF network element receiving the type information and the AF address from a network exposure function (NEF) network element, the NEF network element receiving a wireless network information exposure request from an AF network element corresponding to the AF address, and the wireless network information exposure request carrying an AF identity (ID) of the AF network element and the type information; and
a target wireless network information forwarding unit, configured to send the target wireless network information and the AF address to an anchor user plane function (UPF) network element, wherein the anchor UPF network element sends the target wireless network information to the AF network element according to the AF address.

41. A network information exposure apparatus, comprising:
a target wireless network information transfer unit, configured to receive target wireless network information and an application function (AF) address from an intermediate user plane function (UPF) network element or a base station, the intermediate UPF network element receiving the target wireless network information and the AF address that are sent by the base station, the base station receiving type information of the target wireless network information and the AF address, which are sent by an access and mobility management function (AMF) network element, and determining the target wireless network information according to the type information, the AMF network element receiving the type information and the AF address from a network exposure function (NEF) network element, the NEF network element receiving a wireless network information exposure request from an AF network element corresponding to the AF address, and the wireless network information exposure request carrying an AF identity (ID) of the AF network element and the type information; and
a target wireless network information transmission unit, configured to send the target wireless network information to the AF network element corresponding to the AF address.

42. An electronic device, comprising:
one or more processors; and
a storage apparatus, configured to store one or more programs, the one or more programs, when executed by the one or more processors, enabling the electronic device to implement the method according to any one of claims 1 to 14, the method according to any one of claims 15 to 24, the method according to any one of claims 25 to 26, the method according to any one of claims 27 to 29, the method according to any one of claims 30 to 31, or the method according to any one of claims 32 to 35.

43. A computer-readable storage medium, the computer-readable storage medium storing a computer program, and the computer program being executed by a processor to implement the method according to any one of claims 1 to 14, the method according to any one of claims 15 to 24, the method according to any one of claims 25 to 26, the method according to any one of claims 27 to 29, the method according to any one of claims 30 to 31, or the method according to any one of claims 32 to 35.
